# EUROPEAN PATENT SPECIFICATION

(11) **EP 1 559 639 B1**
(45) Date of publication and mention of the grant of the patent: **25.04.2007**
(21) Application number: 04380294.1
(22) Date of filing: 30.12.2004
(51) Int. Cl.: B62D 25/14, B60K 37/00

(54) **Dashboard binnacle for automotive vehicles**
Armaturenbrett-Überdeckung für Kraftfahrzeuge
Couverture de tableau de bord pour véhicules automobiles

(30) Priority: 30.01.2004 ES 200400204 U
(43) Date of publication of application: 03.08.2005
(73) Proprietor: Seat, S.A., 08040 Barcelona (ES)
(72) Inventor: Martos Ortega, Antonio, 08760 Martorell (Barcelona) (ES); Rodriguez Tellez, Manuel, 08760 Martorell (Barcelona) (ES)
(74) Representative: Carvajal y Urquijo, Isabel

(56) References cited:
- WO-A-02/100674
- DE-A1- 19 524 153
- DE-A1- 19 807 317
- US-A1- 2001 030 435

## Description

The present invention relates to a front board for automotive vehicles, or dash, which is made up of a shaped panel having a binnacle and a space located immediately underneath said binnacle, wherein the instrument panel is mounted.

The board or dash of an automotive vehicle generally has an overhang projecting immediately above the instrument panel, which is called a binnacle. This overhang or binnacle has a curved layout, having a concave-curved lower and a convex-curved upper surface around the instrument panel.

The mission of this binnacle in the instrument panel is to allow the driver of the vehicle to have an optimum vision thereof preventing sunrays from reaching the instrument panel and causing reflections affecting the visual perception on the part of the driver of the information offered by said instrument panel. The binnacle also has other secondary functions such as concealing the instrument panel itself from an outside view of the vehicle, together with an aesthetic function by this element being located in the board of the vehicle, which is a highly visible portion from both inside and outside of the vehicle, thus affecting its inside appearance.

Currently, most vehicles have the binnacle incorporated in the board. However, this construction system leaves little room for design creativity. Document DE 198 07 317 discloses a front board according to the preamble of claim 1 in which the binnacle is independant of a shaped panel of the board.

The object of the present invention is to design a front board for automotive vehicles, or dash, wherein different innovative designs and more pronounced lines for the binnacle regardless of the panel which constitutes the board can be obtained without altering the overall makeup or line of said board or dash.

Thus, according to the invention, the binnacle is designed as an independent unit or component of the panel which constitutes the board or dash, without such makeup entailing a loss of rigidity and stability among the components, whereby the binnacle is provided with a system of fastening to the panel of the board that fulfills two fundamental requirements: simplicity, so as to facilitate the mounting of the binnacle to the panel of the board; and safety and efficiency, so as to satisfy the necessary strength exigencies.

In order to achieve the ends set forth, the independent piece constituting the binnacle ends at the back in a skirt that may be coupled on a seat that the panel has, limiting on top the space for the instrument panel. The skirt and seat have anchoring means allowing the attachment of the binnacle to the panel, as well as complementary conformations ensuring the relative positioning between the binnacle and panel, and faceable orifices for the passage of attachment screws.

The anchoring means may consist in side tabs projecting from the back of the skirt, and the same number of faceable gaps that the seat has, the tabs being partially insertable and able to fit in said gaps by elastic bending. These elements will allow the binnacle to be rigidly fastened to the panel of the board in a simple and fast first mounting operation, the correct position of the binnacle being ensured by the aforementioned complementary conformations.

As already indicated, both the skirt of the binnacle and the seat of the panel of the board have a certain number of faceable holes, which allow achieving a safe final fastening of the binnacle to the board assembly by means of screws, fastening that may be carried out by means of staples arranged along the rear surface of the panel and which will act to lock the screws without the need for threaded holes.

The configuration of the binnacle, by means of the curved surface and a back skirt, also contributes in an important way to the simplicity of the system, as said skirt is one of the components, together with the use of the anchoring means on the basis of said tabs, responsible for the great rigidity and stability of the pre-mounted assembly. This design is derived as indicated from the curved surface of the binnacle, the flat back skirt, and the conformations that allow ensuring the positioning of the binnacle in the panel of the board in a fast and accurate manner.

With the described makeup, mounting of the binnacle will be carried out by placing it by its skirt on the corresponding seat of the panel of the board and slightly pressing so as to fasten both tabs of the binnacle in the cavities of the seat of the panel, achieving a very rigid and stable fit. Next, the final joining may be carried out by means of the screws inserted through the facing orifices of the skirt of the binnacle and the seat of the board, whereupon a robust fastening preventing vibrations due to plays and tolerances between the pieces which are joined and providing greater consistency to the assembly will be achieved.

The makeup set forth allows achieving economic savings due to the smaller need of external fastening elements, screws and staples, given that the use of the tabs, which are part of the body itself of the elements to be joined, already provide a high rigidity to the system.

On the other hand, a considerable ease and speed in the mounting stage is achieved, as the design of the binnacle and the skirt thereof, together with the clipping ease due to the anchoring tabs, results in a strong and stable assembly that affords the operator total independence in order to be capable of performing the last mounting step by means of the corresponding screws.

The constitution and features of the board of the invention may be better understood by means of the following description, made with reference to the attached drawings, wherein a non-limiting embodiment is shown.

In the drawings:
Figure 1 is a front view of a binnacle constituted in accordance with the invention.
Figure 2 is a rear perspective view of the binnacle of figure 1.
Figure 3 is a side elevation view of the binnacle of figures 1 and 2.
Figure 4 corresponds to the detail A of figure 2 at a greater scale.
Figure 5 is a perspective detail of the area of the panel constituting the front board wherein the binnacle of figures 1 to 3 is mounted.
Figure 6 is a cross-sectional view of the binnacle, mounted in the panel, according to the central transversal symmetry plane.
Figure 7 is a cross-sectional view of the binnacle according to a plane passing through one of the anchoring side tabs.

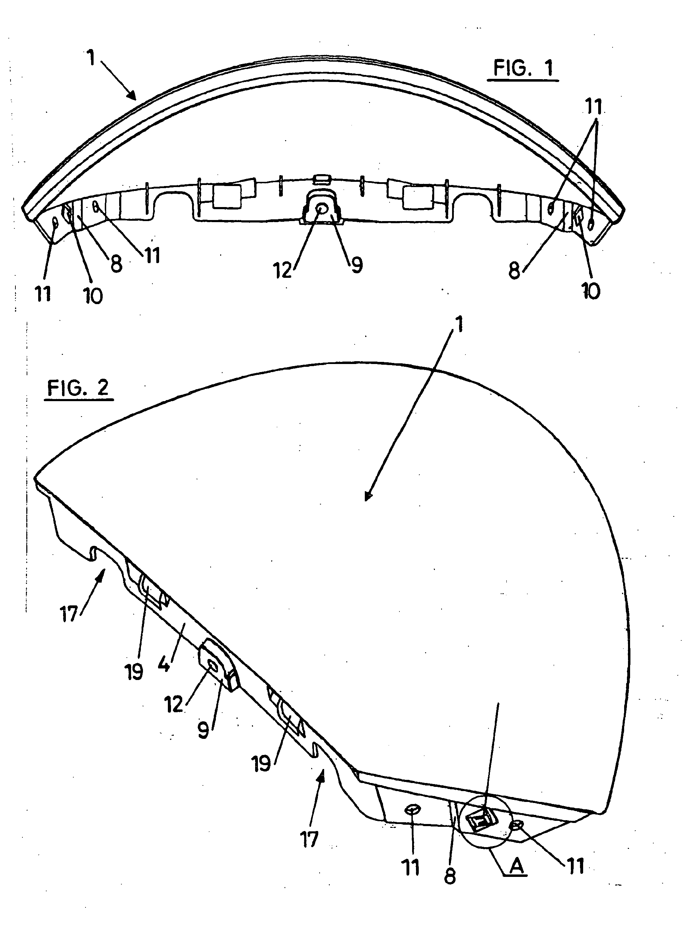

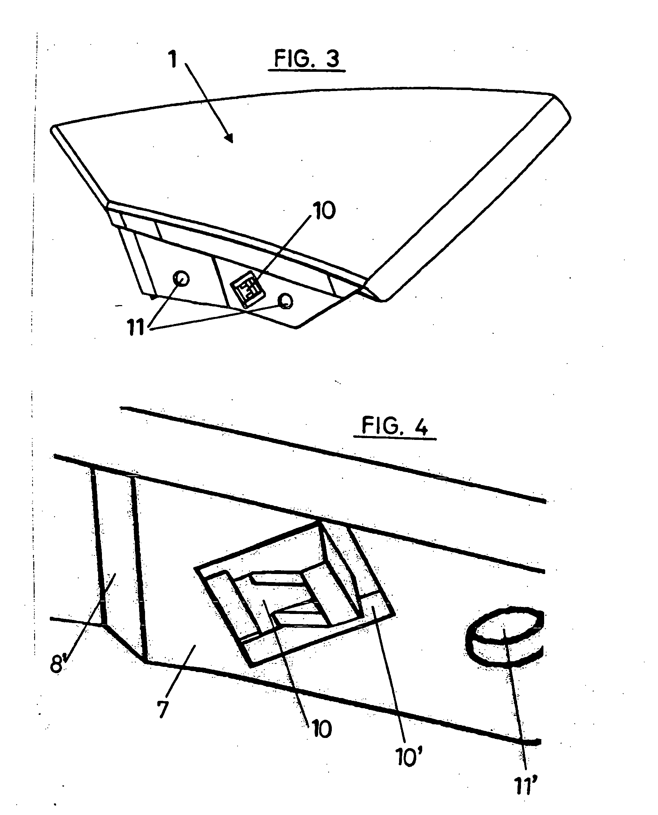

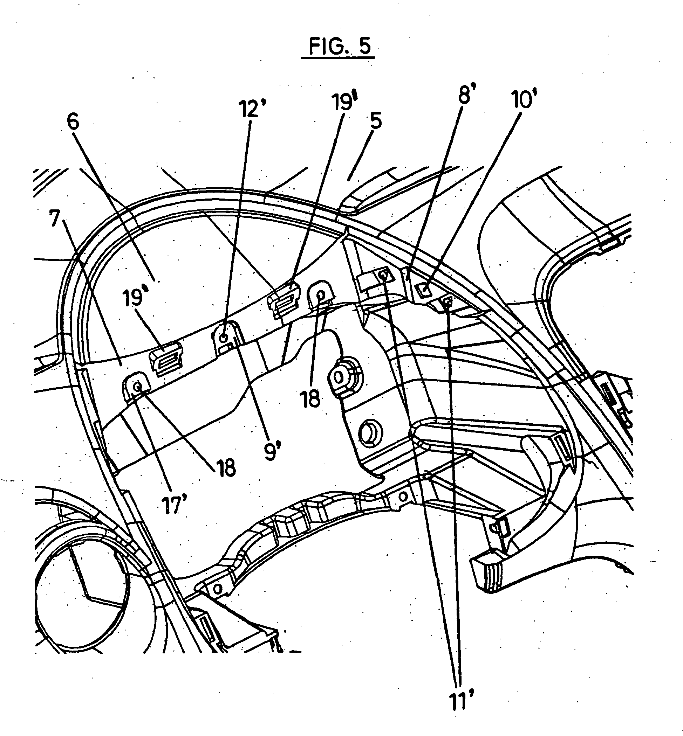

The board of the invention is made up of a shaped panel, which is partially represented in perspective in figure 5, and an independent binnacle, which is represented in figures 1 to 3, where its is generally referenced with number 1.

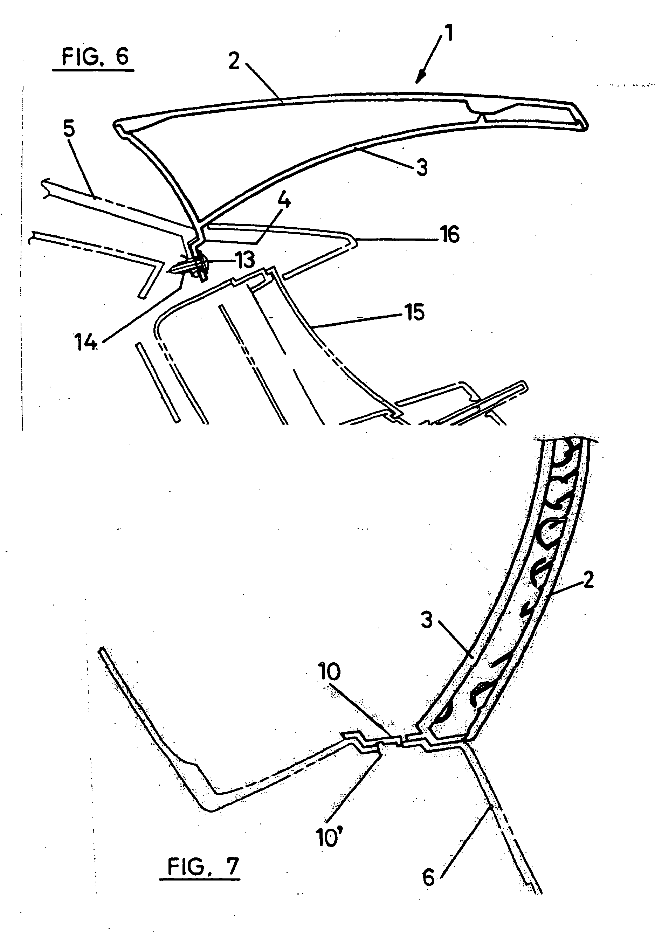

The binnacle 1 is independent from the panel constituting the dash and has a curved layout, with a concave-curved inner and a convex-curved outer surface, being able to adopt any constitution, for example, by means of two walls, one outer which is referenced with number 2 and another internal which is referenced with number 3 in figures 6 and 7, related and joined to each other by any system.

This binnacle 1 ends at the back in a skirt 4, for example, as extension of the inner wall 3.

The shaped panel constituting the front board or dash is generally referenced with number 5 in figures 5 and 6 and has a space 6 wherein the instrument panel will be installed, space that has at the back a seat 7 for supporting the skirt 4 of the binnacle 1.

Both the skirt 4 and seat 7 have complementary conformations 8-8' and 9-9' ensuring the correct positioning of the binnacle 1 in panel 5 by placing the skirt 4 against the seat 7. The skirt and seat also have anchoring means which are constituted by at least two elastically deformable side tabs 10, which project from the rear of the skirt, and the same number of faceable gaps 10' that the seat 7 has, tabs 10 being insertable in gaps 10' by elastic deformation until being clamped or attached therein.

With these members, means ensuring the correct positioning of the binnacle 1 in panel 5, as well as a secure attachment of said binnacle in the space 6 of the panel, are available, all this as can be seen in greater detail in figure 7.

The skirt 4 and seat 7 also have faceable orifices, referenced with numbers 11 and 12 in the skirt 4 and with numbers 11' and 12' in the seat 7, through which attachment screws 13 may be inserted which may be fastened for example by means of staples 14 arranged behind the panel 5 and whereupon a mounting is achieved in which the risk of vibrations of the binnacle with respect to the board are eliminated.

The binnacle 1 may adopt the shape of a spherical cap, with symmetry with respect to the vertical plane passing through the central orifice 12.

Figure 6 furthermore depicts the instrument panel 15 and the face 16 thereof, components which will also be fixed to the panel 5 of the board, inside the space 6 thereof represented in figure 5, and for which said space will be provided in a known fashion with a rear surface or seat, coupling conformations, and orifices for the passage of attachment screws.

As can be seen in figure 2, the skirt 4 of the binnacle has in its central section and from the lower edge thereof notches 17 which may be coupled on bosses 17' of the seat 7 of the panel, for accessing orifices 18 for attachment screws of the instrument panel 15. The skirt 4 also has in the central section openings 19, through which access is gained to the projections 19' of the seat 7 of the board, for fixing the face 16 of the instrument panel, figure 6.

The binnacle 1, due to its overall configuration and the inclusion of the back skirt 4, constitutes a robust element, which is correctly positioned in the panel of the board through the complementary conformations 8-8' and rigidly joined thereto thanks to the anchoring means 10-10' and orifices 11-11' for the passage of the attachment screws 13.

As is understandable, both the binnacle 1 and seat 7 may have a different number of complementary conformations, anchoring means and faceable orifices for the passage of the attachment screws from that represented in the drawings.

## Claims

1. A front board for automotive vehicles, constituted by a shaped panel (5) including an upper binnacle (1), underneath which said panel has a space (6) wherein the instrument panel (15) is mounted, whereby said binnacle is independent from the shaped panel, bounding on top the space (6) for the instrument panel (15), **characterized in that** said binnacle (1) ends at the back in a skirt (4) configured to be coupled on a seat (7) that the panel has, the skirt (4) and seat (7) of which have complementary positioning conformations (8-8', 9-9'), anchoring means for attaching the binnacle, and faceable orifices (11-12, 11'-12') for the passage of attachment screws (13).

2. A board according to claim 1, **characterized in that** the anchoring means consist in at least two side tabs (10), projecting from the back of the skirt, and the same number of faceable gaps (10') that the seat has, the tabs being partially insertable and capable of clamping in said gaps by elastic bending.

3. A board according to claim 1, **characterized in that** the complementary conformations consist in transversal steps that fit together which the skirt and seat of the panel have.

4. A board according to claim 1, **characterized in that** said orifices include a central orifice (12) and at least two orifices (11) near the anchoring means (10), the skirt having on its rear surface a projection (9) around the central orifice (12), and the seat, a recess (9') of coincident dimensions and position around the corresponding central orifice for their mutual coupling.

5. A board according to claim 1, **characterized in that** the skirt has openings (17) and/or notches (17) for the passage of fixing elements for the instrument panel (15).

## Patentansprüche

1. Frontseitige Platte für Kraftfahrzeuge, die von einer geformten Tafel (5) gebildet wird, die ein oberes Gehäuse (1) aufweist, unter welchem die Tafel einen Raum (6) hat, in welchem das Armaturenbrett (15) angebracht ist, wobei das Gehäuse von der geformten Tafel unabhängig ist und oben den Raum (6) für das Armaturenbrett (15) begrenzt, **dadurch gekennzeichnet, dass** das Gehäuse (1) an der Rückseite in einer Einfassung (4) endet, die für eine Koppelung auf einem Sitz (7), den die Tafel hat, ausgestaltet ist, wobei die Einfassung (4) und ihr Sitz (7) komplementäre positionierende Angleichteile (3 bis 8', 9, 9'), Verankerungseinrichtungen zum Befestigen des Gehäuses und zuwendbare Öffnungen (11, 12, 11', 12') für den Durchgang von Befestigungsschrauben (13) aufweisen.

2. Platte nach Anspruch 1, **dadurch gekennzeichnet, dass** die Verankerungseinrichtungen aus wenigstens zwei Seitenlaschen (10), die von der Rückseite der Einfassung vorstehen, und aus der gleichen Anzahl von zuwendbaren Spalten (10'), die der Sitz hat, bestehen, wobei die Laschen teilweise einführbar und in der Lage sind, durch elastisches Biegen in den Spalten zu klemmen.

3. Platte nach Anspruch 1, **dadurch gekennzeichnet, dass** die komplementären Angleichteile aus zusammenpassenden Querabstufungen bestehen, die die Einfassung und der Sitz der Platte haben.

4. Platte nach Anspruch 1, **dadurch gekennzeichnet, dass** die Öffnungen eine zentrale Öffnung (12) und wenigstens zwei Öffnungen (11) in der Nähe der Verankerungseinrichtungen (10) aufweisen, wobei die Einfassung auf ihrer Rückseite einen Vorsprung (9) um die zentrale Öffnung (12) herum und der Sitz eine Aussparung (9') mit koinzidenten Abmessungen und einer Position um die entsprechende zentrale Öffnung herum für ihre gegenseitige Koppelung aufweist.

5. Platte nach Anspruch 1, **dadurch gekennzeichnet, dass** die Einfassung Öffnungen (17) und/oder Einkerbungen (17) für den Durchgang von Befestigungselementen für das Armaturenbrett (15) hat.

## Revendications

1. Plaque frontale pour véhicules automobiles, constituée d'un panneau profilé (5) comprenant un habitacle supérieur (1), sous lequel ledit panneau comporte un espace (6) où le tableau de bord (15) est monté, moyennant quoi ledit habitacle est indépendant du panneau profilé, s'attachant au-dessus de l'espace (6) pour le tableau de bord (15), **caractérisée en ce que** ledit habitacle (1) se termine à l'arrière dans une jupe (4) configurée pour être couplée sur un siège (7) que comporte le panneau, dont la jupe (4) et le siège (7) comportent des conformations de position complémentaires (8-8', 9-9'), des moyens d'ancrage pour fixer l'habitacle et des orifices pouvant être positionnés face à face (11-12, 11'-12') pour le passage de vis de fixation (13).

2. Plaque selon la revendication 1, **caractérisée en ce que** les moyens d'ancrage consistent en au moins deux pattes latérales (10), faisant saillie à partir de l'arrière de la jupe, et le même nombre d'écartements pouvant être positionnés face à face (10') que comporte le siège, les pattes pouvant être partiellement insérées et capables de se bloquer dans lesdits écartements par flexion élastique.

3. Plaque selon la revendication 1, **caractérisée en ce que** les conformations complémentaires que comportent la jupe et le siège du panneau consistent en des paliers transversaux qui s'assemblent.

4. Plaque selon la revendication 1, **caractérisée en ce que** lesdits orifices comprennent un orifice central (2) et au moins deux orifices (11) près des moyens d'ancrage (10), la jupe ayant sur sa surface arrière une saillie (9) autour de l'orifice central (12), et le siège, un évidement (9') de dimensions et de position coïncidentes autour de l'orifice central correspondant pour leur couplage mutuel.

5. Plaque selon la revendication 1, **caractérisée en ce que** la jupe comporte des ouvertures (17) et/ou des entailles (17) pour le passage d'éléments de fixation pour le tableau de bord (15).
